# FASCICULE DE BREVET EUROPEEN

(11) **EP 3 600 979 B1**
(45) Date de publication et mention de la délivrance du brevet: **15.12.2021**
(21) Numéro de dépôt: 18713243.6
(22) Date de dépôt: 27.03.2018
(51) Int. Cl.: B60S 1/38

(54) **EMBOUT D'EXTRÉMITÉ CONSTITUTIF D'UN BALAI D'ESSUYAGE**
ENDSTÜCK FÜR EIN WISCHERBLATT
END PIECE FOR A WIPER BLADE

(30) Priorité: 27.03.2017 FR 1752534
(43) Date de publication de la demande: 05.02.2020
(73) Titulaire: Valeo Systèmes d'Essuyage, 78322 Le Mesnil Saint Denis (FR)
(72) Inventeur: BOUSSET, Xavier, 63500 Issoire (FR); BARRET, Guillaume, 63500 Issoire (FR); GAUCHER, Vincent, 63500 Issoire (FR); HOUSSAT, Stéphane, 63500 Issoire (FR); JOMARD, Olivier, 63500 Issoire (FR); THEBAULT, Denis, 63500 Issoire (FR)
(74) Mandataire: Valeo Visibility
(86) Numéro de dépôt international: PCT/EP2018/057831
(87) Numéro de publication internationale: WO 2018/178110

(56) Documents cités:
- WO-A1-2018/041703
- DE-A1-102011 078 172
- US-A1- 2008 289 134
- US-A1- 2013 067 676

## Description

Le domaine de la présente invention est celui des systèmes d'essuyage destinés à équiper un véhicule automobile. Elle a pour objet un embout d'extrémité constitutif d'un balai d'essuyage. Elle a aussi pour objet un balai d'essuyage comprenant un tel embout d'extrémité.

Un système d'essuyage, couramment dénommé essuie-glace, pour véhicule automobile est conçu pour retirer, par balayage, les liquides et salissures qui peuvent perturber la vision qu'un conducteur du véhicule automobile a de son environnement. Les essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, puis les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant au moins un support flexible qui maintient la lame racleuse sur toute sa longueur, autrement appelé « balai plat », le balai d'essuyage est rattaché à une partie terminale du bras d'entraînement par l'intermédiaire d'un dispositif de connexion qui comprend un connecteur monté solidaire du balai d'essuyage.

A chacune des extrémités longitudinales du balai d'essuyage dans sa variante « balai plat », la lame racleuse et le support flexible sont équipées d'un embout d'extrémité qui participe d'un maintien solidaire de la lame racleuse et du support flexible entre eux.

Un état de la technique est formé par le document US2014/0352099 dans lequel l'embout d'extrémité est apte à recevoir les extrémités longitudinales de deux supports flexibles et l'extrémité longitudinale de la lame racleuse. A cet effet, l'embout d'extrémité comporte un premier logement et un deuxième logement aptes à recevoir chacun une extrémité longitudinale de l'un des supports flexibles. L'embout d'extrémité comporte un troisième logement qui est apte à recevoir l'extrémité longitudinale de la lame racleuse. Un tel embout est conçu pour la réception de deux supports flexibles et il ne convient pas à un balai d'essuyage utilisant un unique support flexible.

L'embout d'extrémité comporte une languette qui est ménagée dans un plan d'une paroi inférieure de l'embout d'extrémité. Plus particulièrement, la paroi inférieure comporte une ouverture à l'intérieur de laquelle la languette s'étend. La languette comporte une première extrémité qui est relié à un rebord de l'ouverture et une deuxième extrémité qui forme une butée à l'égard d'un composant du balai d'essuyage. La languette est montée mobile en rotation autour d'un axe de rotation qui est situé au niveau du rebord de l'ouverture recevant la languette. Il en découle que la deuxième extrémité formant la butée est susceptible de se déplacer en rotation avec un fort débattement angulaire, en raison de la longueur conséquente de la partie d'élongation située entre la première extrémité et la deuxième extrémité de la languette. Il en résulte une fragilité de la languette et cette difficulté forme un premier inconvénient de l'art antérieur.

Lors de la mise en place de l'embout d'extrémité sur les extrémités terminales des supports flexibles, la languette tend à se déplacer vers l'extérieur de l'embout d'extrémité. Or, ce déplacement pose problème lors de l'assemblage initial du balai d'essuyage. En effet, l'embout d'extrémité est porté par un dispositif de montage qui vient en interférence avec le déplacement de la languette. Ceci forme un deuxième inconvénient de l'art antérieur.

Enfin, lorsque l'embout d'extrémité est monté sur les supports flexibles, la languette affleure la paroi inférieure. Il est donc aisé pour un individu indélicat d'insérer un outil sous la languette pour extraire celle-ci du premier logement et désolidariser ensuite l'embout d'extrémité des supports flexibles. Ceci forme un troisième inconvénient de l'art antérieur. Un tel embout d'extrémité mérite d'être amélioré pour prévenir ou interdire une désolidarisation de l'embout d'extrémité du support flexible. WO-A-2018/041703 montre le préambule de la revendication 1.

Un but de la présente invention est de proposer un embout d'extrémité robuste dont l'agencement interdit toute désolidarisation de l'embout d'extrémité d'avec le support flexible, sans détériorer l'embout d'extrémité.

L'embout d'extrémité de l'invention est par ailleurs adapté à une structure de balai d'essuyage à support flexible unique. Son moyen de blocage est conçu de sorte à ne pas gêner le processus de montage du balai d'essuyage.

Un embout d'extrémité de la présente invention est un embout d'extrémité pour un balai d'essuyage. L'embout d'extrémité comprend une paroi périphérique séparant un environnement extérieur de l'embout d'extrémité avec un volume interne de l'embout d'extrémité. L'embout d'extrémité délimite un premier logement disposé dans le volume interne et qui s'étend majoritairement dans un premier plan, un deuxième logement étant interposé entre la paroi périphérique et le premier logement, l'embout d'extrémité comprenant au moins un organe de verrouillage configuré pour lier l'embout d'extrémité à un support flexible du balai d'essuyage.

Selon la présente invention, l'organe de verrouillage s'étend au moins à partir de la paroi périphérique et comprend une butée disposée au moins en partie dans le premier logement, l'organe de verrouillage étant configuré pour que la butée puisse être déplacée dans un deuxième plan transversal au premier plan. Selon l'invention, le premier logement et le deuxième logement sont délimités par au moins une paroi interne et l'organe de verrouillage comprend un pied s'étendant de la paroi périphérique à la paroi interne et comprend un corps médian solidaire du pied et s'étendant selon un axe d'extension formant avec le premier plan un premier angle qui est compris entre 30° et 60°.

On précisera que le déplacement de la butée évoqué ci-dessus intervient lors de l'introduction de la première extrémité du support flexible dans le premier logement.

L'embout d'extrémité comprend avantageusement l'une quelconque au moins des caractéristiques suivantes, prises seules ou en combinaison :
- l'embout d'extrémité est monobloc, il est par exemple réalisé au cours d'une unique opération de moulage,
- l'organe de verrouillage est agencé en une languette,
- le premier logement est configuré pour recevoir une première extrémité d'un support flexible du balai d'essuyage,
- le deuxième logement est configuré pour recevoir un talon d'une lame racleuse du balai d'essuyage,
- le premier angle est de l'ordre de 45° à plus ou moins 10%,
- l'organe de verrouillage est globalement conformé en « S » aplati vu dans le deuxième plan,
- l'organe de verrouillage comprend une tête solidaire du corps médian qui est logée à l'intérieur du premier logement,
- la tête comprend la butée, cette dernière étant destinée à venir en contact contre une première bordure que comprend une échancrure ménagée à travers le support flexible,
- une première longueur du pied est comprise entre 1% et 10% d'une longueur de l'organe de verrouillage, la première longueur étant prise dans le deuxième plan,
- une deuxième longueur du corps médian est comprise entre 75% et 85% de la longueur de l'organe de verrouillage, la deuxième longueur étant prise dans le deuxième plan,
- une troisième longueur de la tête est comprise entre 1% et 15% de la longueur de l'organe de verrouillage, la troisième longueur étant prise dans le deuxième plan,
- la tête est montée mobile en rotation autour d'un axe de rotation qui s'étend dans le corps médian.

L'invention porte aussi sur un balai d'essuyage comprenant un tel embout d'extrémité, une lame racleuse et un support flexible, avantageusement unique, comportant une première extrémité logée à l'intérieur du premier logement.

L'invention porte aussi sur un système d'essuyage comprenant un bras d'entraînement pourvu d'un dispositif de connexion avec un tel balai d'essuyage.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon l'invention,
- la figure 2 est une vue en perspective d'un embout d'extrémité constitutif du système d'essuyage représenté sur la figure 1,
- la figure 3 est une vue de face de l'embout d'extrémité illustré sur la figure 2,
- la figure 4 est une vue de face de l'embout d'extrémité illustré sur les figures 2 et 3 associé à une lame racleuse et à un support flexible,
- la figure 5 est une vue de dessous de l'embout d'extrémité illustré sur les figures 2 à 4,
- la figure 6 est une vue partielle en coupe selon un plan longitudinal de l'embout d'extrémité illustré sur les figures 2 à 5,
- la figure 7 est une illustration schématique en coupe selon un plan longitudinal d'un organe de verrouillage que comporte l'embout d'extrémité illustré sur les figures 2 à 6,
- la figure 8 est une illustration schématique en coupe selon un plan longitudinal de l'organe de verrouillage illustré sur la figure 7 associé à un support flexible,
- la figure 9 est une illustration schématique en vue de dessous de l'embout d'extrémité illustré sur les figures 2 à 6.

Il faut tout d'abord noter que les figures exposent l'invention de manière détaillée pour mettre en œuvre l'invention, lesdites figures pouvant bien entendu servir à mieux définir l'invention le cas échéant.

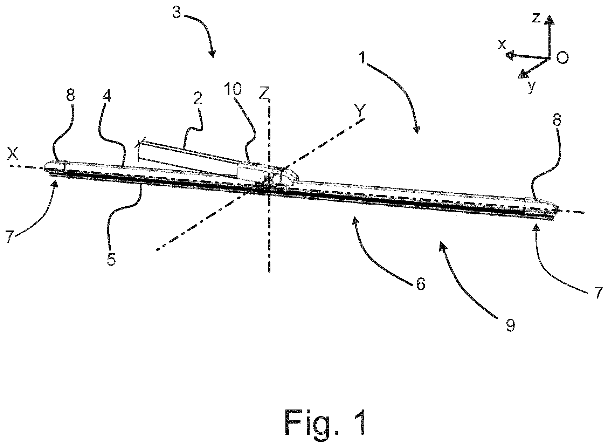

Sur les figures, les dénominations longitudinale, transversale, verticale, latérale, gauche, droite, supérieure, inférieure, se réfèrent à l'orientation, dans un repère orthonormé Oxyz, lié à un embout d'extrémité 8 de la présente invention qui est constitutif d'un balai d'essuyage 1 illustré sur la figure 1. Dans ce repère, l'axe Ox représente la direction longitudinale, l'axe Oy représente la direction transversale, et l'axe Oz représente la direction verticale de l'objet considéré, indifféremment l'embout d'extrémité 8 ou le balai d'essuyage 1. Dans ce repère, un plan longitudinal est parallèle au plan Oxz, un plan transversal est parallèle au plan Oyz et un plan vertical est parallèle à un plan Oxy. Dans ce repère, un élément longitudinal s'étend selon l'axe Ox et un élément latéral s'étend selon l'axe Oy. Ces dénominations s'appliquent à l'embout d'extrémité 8 seul ou participant du balai d'essuyage 1 ou bien au balai d'essuyage 1 pourvu de l'embout d'extrémité 8, les éléments constitutifs du balai d'essuyage 1 étant assemblés entre eux partiellement ou totalement.

Sur la figure 1, le balai d'essuyage 1 de la présente invention s'étend selon un axe longitudinal X, parallèle à l'axe Ox. Les dénominations latérales, gauche et droite, s'apprécient par rapport à une position le long d'un axe transversal Y, parallèle à l'axe Oy, de part et d'autre de l'axe longitudinal X. Un axe vertical Z symbolise une direction verticale, parallèle à celle de l'axe Oz, qui est perpendiculaire aux directions longitudinale et transversale décrites ci-dessus. Les dénominations supérieure ou inférieure se rapportent à des orientations le long de l'axe vertical Z, la dénomination inférieure contenant le plan du pare-brise. Pour les directions longitudinales, les dénominations extérieure ou intérieure s'apprécient par rapport à un point de pivotement du balai d'essuyage 1 sur un bras d'entraînement 2 du balai d'essuyage 1, la dénomination intérieure correspondant à la partie où le bras d'entraînement 2 et un demi-balai s'étendent, la dénomination extérieure correspondant à la partie où l'autre demi-balai s'étend.

Un véhicule automobile est couramment équipé d'un système d'essuyage 3 pour évacuer une eau et/ou des salissures présentes sur une surface vitrée, notamment une lunette arrière ou un pare-brise avant de véhicule automobile. Le système d'essuyage 3 comprend le bras d'entraînement 2 qui est apte à effectuer un mouvement de va-et-vient angulaire le long et au-dessus de la surface vitrée.

Le système d'essuyage 3 comprend aussi le balai d'essuyage 1 qui s'étend selon l'axe longitudinal X. Le balai d'essuyage 1 comprend une lame racleuse 5 et au moins un déflecteur d'air 4. Le déflecteur d'air 4 est prévu pour transformer une pression appliquée par un flux d'air circulant le long de la surface vitrée en une force d'appui du balai d'essuyage 1 contre la surface vitrée du véhicule automobile.

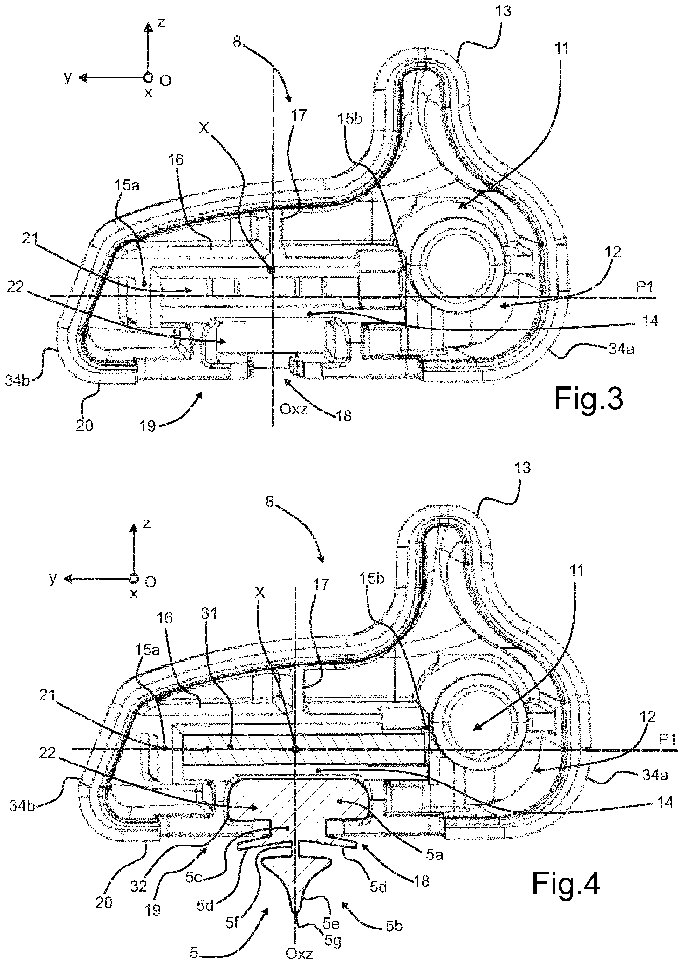

La lame racleuse 5 est la pièce du balai d'essuyage 1 en contact direct avec la surface vitrée pour évacuer l'eau et/ou les salissures présentes sur cette dernière. La lame racleuse 5 est par exemple une lame souple réalisée en un matériau élastique, tel qu'un polymère, caoutchouc notamment. Le balai d'essuyage 1 comprend aussi un unique support flexible 6, plus particulièrement visible sur la figure 4, qui confère au balai d'essuyage 1 une certaine déformation dans le plan Oxz et une conformation cintrée pour une application optimisée du balai d'essuyage 1 contre la surface vitrée.

Le balai d'essuyage 1 comprend également à chacune de ses extrémités longitudinales 7 l'embout d'extrémité 8 de la présente invention. Chaque embout d'extrémité 8 est prévu pour maintenir ensemble la lame racleuse 5 et le support flexible 6, un tel embout d'extrémité 8 pouvant par exemple couvrir une partie terminale du déflecteur d'air 4. Le support flexible 6 s'étend donc d'une première extrémité longitudinale 7 du balai d'essuyage 1 à une deuxième extrémité longitudinale 7 du même balai.

Selon l'exemple de réalisation, le support flexible 6 est unique et est par exemple une bande métallique, autrement appelé vertèbre. Une telle vertèbre est avantageusement unique, au moins vue dans le plan Oxy.

Le déflecteur d'air 4, la lame racleuse 5 et le support flexible 6 forment une structure semi-rigide 9 qui est portée par un dispositif de connexion 10, interposé entre une partie terminale du bras d'entraînement 2 et la structure semi-rigide 9. Un tel dispositif de connexion 10 comprend par exemple un connecteur solidaire au moins de manière isostatique de la structure semi-rigide 9, et un adaptateur relié par une liaison pivot au connecteur.

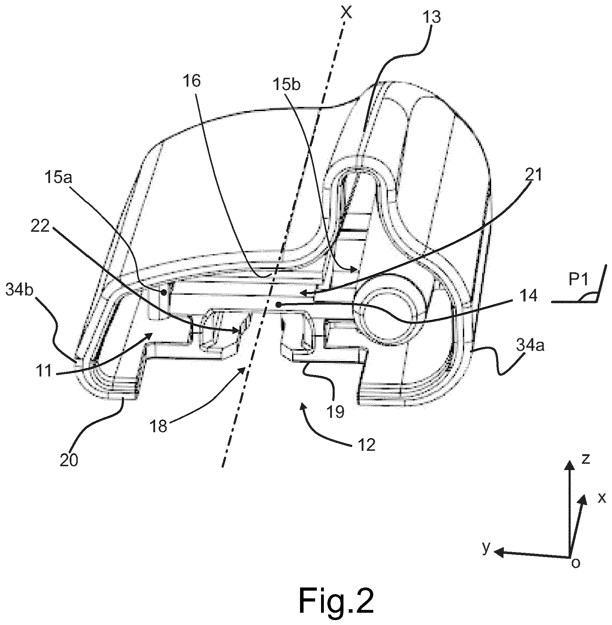

Sur les figures 2 à 4, l'embout d'extrémité 8 est globalement agencé en une coque qui délimite un volume interne 11 accessible par l'intermédiaire d'un passage 12. L'embout d'extrémité 8 est délimité par une paroi périphérique 20 qui constitue l'enveloppe externe de l'embout d'extrémité 8. Le passage 12 s'étend préférentiellement à l'intérieur d'un plan parallèle à un plan transversal Oyz. L'embout d'extrémité 8 comprend une arête supérieure 13 qui est prévue pour loger une extrémité longitudinale d'un bord d'attaque du déflecteur d'air 4. L'arête supérieure 13 s'étend globalement dans un plan vertical Oxz.

L'embout d'extrémité 8 comporte au moins deux logements distincts 21, 22, dont un premier logement 21 prévu pour recevoir une première extrémité longitudinale 31 du support flexible 6 et dont un deuxième logement 22 prévu pour recevoir partiellement une première extrémité longitudinale 32 de la lame racleuse 5, les extrémités longitudinales 31, 32 étant plus particulièrement visibles sur la figure 4. Le premier logement 21 et le deuxième logement 22 sont séparés l'un de l'autre par une paroi interne 14 commune à ces deux logements, ces derniers ne communiquant pas entre eux. Le premier logement 21 et le deuxième logement 22 s'étendent majoritairement chacun dans un plan respectif parallèle au plan horizontal Oxy, en s'étendant selon l'axe longitudinal X. Plus particulièrement, le premier logement 21 s'étend majoritairement dans le premier plan P1.

Le premier logement 21 et le deuxième logement 22 sont superposés l'un à l'autre le long de l'axe longitudinal X, le premier logement 21 étant placé au-dessus du deuxième logement 22, en position d'utilisation du balai d'essuyage 1 sur le véhicule automobile. Dans cette configuration, le premier logement 21 est un logement supérieur et le deuxième logement 22 est un logement inférieur. Le premier logement 21 et le deuxième logement 22 sont débouchant sur l'extérieur de l'embout d'extrémité 8 par l'intermédiaire du passage 12. Un tel passage 12 donne accès au premier logement 21 pour la première extrémité longitudinale 31 du support flexible 6 et au deuxième logement 22 pour la première extrémité longitudinale 32 de la lame racleuse 5.

En se reportant plus particulièrement sur la figure 4, la lame racleuse 5 comprend un talon 5a et une tête 5b reliés l'un à l'autre par un corps intermédiaire 5c. Le deuxième logement 22 est plus particulièrement destiné à recevoir le talon 5a de la lame racleuse 5 de manière à laisser émerger la tête 5b de la lame racleuse 5 hors de l'embout d'extrémité 8. Le talon 5a présente par exemple une section transversale complémentaire à la section transversale du deuxième logement 22. La section transversale du talon 5a est ici globalement rectangulaire pour faciliter une insertion du talon 5a à l'intérieur du deuxième logement 22, qui est également de section transversale rectangulaire.

La tête 5b comprend par exemple des bras latéraux 5d qui sont portés par le corps intermédiaire 5c et une pointe effilée 5e reliée aux bras latéraux 5d par l'intermédiaire d'une charnière 5f. La pointe effilée 5e de la lame racleuse 5 est prévue pour circuler le long de la surface vitrée, une zone de frottement 5g de la pointe effilée 5e venant au contact de la surface vitrée lors de la mise en place du balai d'essuyage 1 sur la surface vitrée. La zone de frottement 5g d'un côté, et le talon 5a de l'autre, forment chacun une extrémité de la lame racleuse 5 vue dans un plan Oxz. Ce plan qui passe par la zone de frottement 5g et par le talon 5a forme un plan longitudinal médian qui partage symétriquement la lame racleuse 5, tel que cela est visible sur la figure 4.

Le premier logement 21 et le deuxième logement 22 sont préférentiellement délimités par au moins la paroi interne 14 constitutive de l'embout d'extrémité 8. Cette paroi est commune en ce sens qu'elle délimite les deux logements 21 et 22. La paroi interne 14 s'étend à l'intérieur d'un plan parallèle au plan horizontal Oxy entre le premier logement 21 et le deuxième logement 22.

Le premier logement 21 est aussi délimité par au moins un montant, et préférentiellement deux montants 15a, 15b, comme illustré sur les figures 2 à 4. Les montants 15a, 15b sont parallèles entre eux et parallèles à un plan parallèle au plan Oxz et comprennent un montant gauche 15a et un montant droit 15b.

Le premier logement 21 est aussi délimité par une paroi supérieure 16 qui est parallèle à la paroi interne 14 et qui est orthogonale aux montants 15a, 15b. La paroi supérieure 16 s'étend entre la paroi interne 14 et la paroi périphérique 20, en étant ménagée au-dessus de la paroi interne 14.

Le premier logement 21 est bordé par la paroi interne 14, les montants 15a, 15b et la paroi supérieure 16 qui forment des rampes de guidage lors de l'insertion par coulissage de la première extrémité 31 du support flexible 6 à l'intérieur du premier logement 21.

Une paroi de renfort 17 s'étend entre le premier logement 21 et la paroi périphérique 20, pour porter le premier logement 21 et le deuxième logement 22 et renforcer la structure interne de l'embout d'extrémité 8.

Le premier logement 21 est latéralement plus étendu que le deuxième logement 22 de telle sorte que le premier logement 21 surplombe totalement le deuxième logement 22.

Le deuxième logement 22 est équipé d'un canal 18. Le canal 18 débouche vers l'extérieur de l'embout d'extrémité 8 et il est ménagé en s'étendant parallèlement à l'axe longitudinal X. Le canal 18 permet une communication entre le deuxième logement 22 et l'extérieur de l'embout d'extrémité 8. Ce canal 18 prend la forme d'une fente ménagée à travers une paroi inférieure 19 de l'embout d'extrémité 8. La paroi inférieure 19 est constitutive de la paroi périphérique 20 et en forme sa partie inférieure qui est disposée en vis-à-vis du pare-brise en position d'utilisation du balai d'essuyage 1 sur le véhicule automobile.

Le canal 18 reçoit au moins partiellement le corps intermédiaire 5c de la lame racleuse 5, tandis que le deuxième logement 22 reçoit le talon 5a de la lame racleuse 5, la tête 5b étant maintenue hors de l'embout d'extrémité 8.

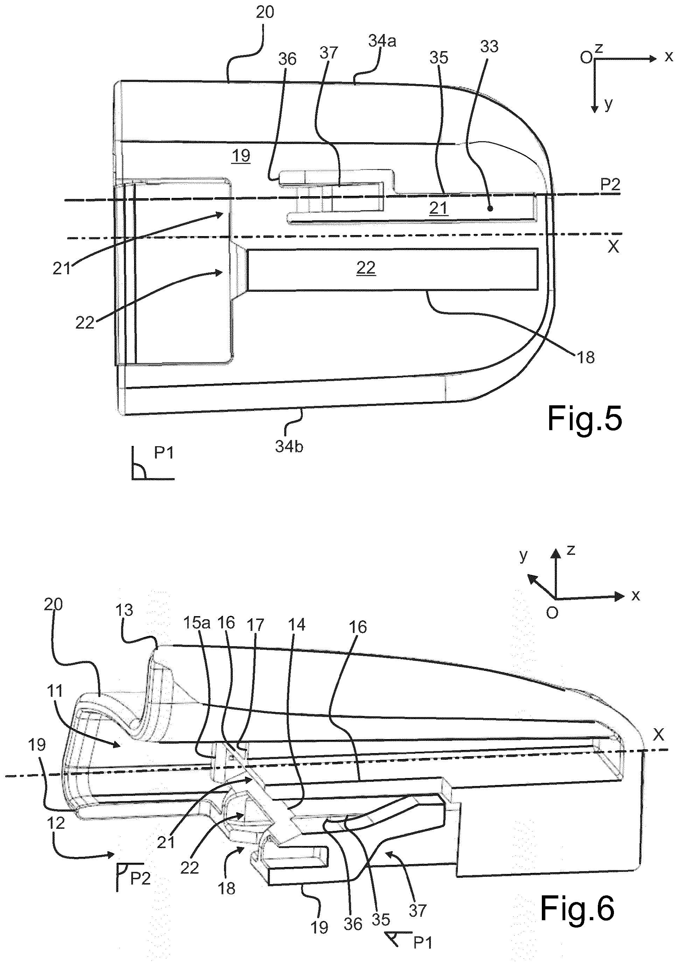

En se reportant sur la figure 5, la paroi inférieure 19 est pourvue d'une ouverture 33 qui est latéralement décalée par rapport au canal 18. On comprend en cela que le canal 18 est ménagé sensiblement à égale distance de bords latéraux 34a, 34b, dont un bord latéral droit 34a et un bord latéral gauche 34b, de l'embout d'extrémité 8 et que l'ouverture 33 est interposée entre le canal 18 et l'un des bords latéraux 34a, 34b, indifféremment le bord latéral droit 34a et le bord latéral gauche 34b. L'ouverture 33 et le canal 18 sont longitudinalement étendus parallèlement à l'axe longitudinal X. L'ouverture 33 est délimitée par un rebord 35 qui comprend une première portion 36 qui s'étend perpendiculairement à l'axe longitudinal X. La première portion 36 est la portion du rebord 35 qui est la plus rapprochée du passage 12.

Sur la figure 6, la première portion 36 constitue le point d'ancrage d'un organe de verrouillage 37, notamment configuré en une languette, qui est destiné à immobiliser le support flexible 6 à l'intérieur du premier logement 21. L'organe de verrouillage 37 est agencé pour empêcher un déplacement longitudinal de l'embout d'extrémité 8 par rapport au support flexible, le long de l'axe longitudinal X. A cet effet, l'organe de verrouillage 37 est majoritairement ménagé à l'intérieur du premier logement 21. On comprend en cela que qu'un volume de l'organe de verrouillage 37 s'étend essentiellement à l'intérieur du premier logement 21 et n'est pas ménagé dans le prolongement de la paroi périphérique 20. Il en résulte que l'organe de verrouillage 37 est globalement logé à l'intérieur du premier logement 21 et qu'en cela l'organe de verrouillage 37 ne peut pas être déplacé à la main à partir de l'extérieur de l'embout d'extrémité 8. Il en découle qu'une fois la première extrémité 31 du support flexible 6 logée à l'intérieur du premier logement 21, le support flexible 6 est indémontable à partir d'une action sur l'organe de verrouillage 37 en raison de son caractère enfoui à l'intérieur de l'embout d'extrémité 8. On comprend aussi que la paroi périphérique 20 forme un obstacle à l'encontre d'une tentative de saisissement de l'organe de verrouillage 37 par exemple à l'aide d'un objet pointu qu'un utilisateur indélicat tenterait de loger sous l'organe de verrouillage 37 pour l'extirper hors du premier logement 21. Ce caractère insaisissable et non-préhensible de l'organe de verrouillage 37 est obtenu notamment à partir d'une conformation géométrique de l'organe de verrouillage 37 qui est décrite ci-dessous.

L'organe de verrouillage 37 est configuré pour tourner ou fléchir autour d'un axe de rotation et dans un deuxième plan P2 qui est transversal, avantageusement perpendiculaire, au premier plan P1 dans lequel s'étend majoritairement le premier logement 21. L'organe de verrouillage 37 est donc disposé sur l'embout d'extrémité 8 de sorte à ce que l'axe de rotation autour duquel l'organe de verrouillage 37 tourne ou fléchit soit parallèle au premier plan P1 définissant le premier logement 21.

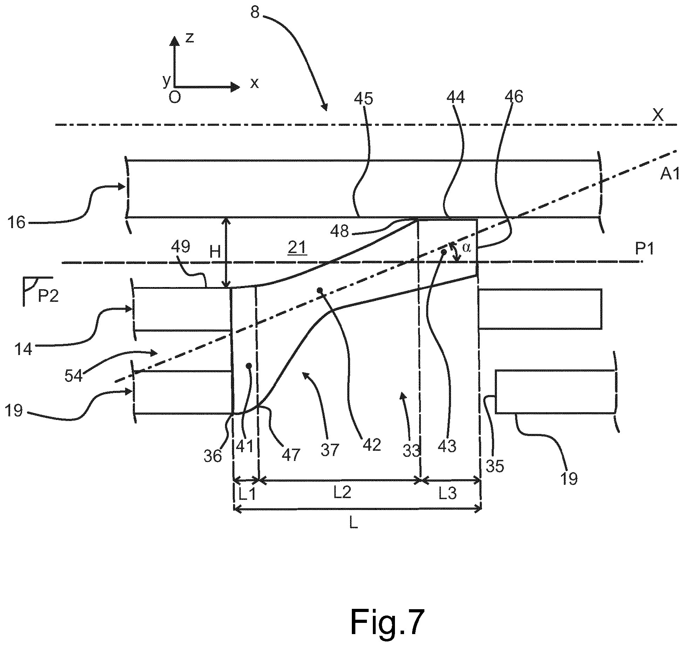

Tel qu'illustré sur la figure 7, l'organe de verrouillage 37 comprend successivement un pied 41, un corps médian 42 et une butée 43. Le pied 41, le corps médian 42 et la butée 43 sont ci-après isolés pour mieux les décrire mais on comprend qu'ils sont conjointement issus de moulage et forment ensemble un ensemble monobloc et qu'ils ne sont isolés géométriquement ci-après que pour faciliter la compréhension de leur structure et de leur fonction.

Le pied 41 de l'organe de verrouillage 37 s'étend entre la paroi inférieure 19 et la paroi interne 14. Autrement dit, le pied 41 s'étend à l'intérieur d'un plan parallèle au plan Oyz. Le pied 41 constitue un élément de liaison entre la paroi inférieure 19 et la paroi interne 14.

La butée 43 comporte une face de maintien 44 qui est en contact avec une face interne 45 de la paroi supérieure 16. La face interne 45 est la face de la paroi supérieure qui borde le premier logement 21. Il en découle que l'organe de verrouillage 37 s'étend à l'intérieur du premier logement 21 depuis la paroi périphérique 20 jusque vers la paroi supérieure 16 en traversant le premier logement 21. Plus précisément, l'organe de verrouillage 37 prend naissance sur la paroi inférieure 19 constitutive de la paroi périphérique 20. Autrement dit, l'organe de verrouillage 37 est logé à l'intérieur du premier logement 21 dans sa quasi-totalité pour éviter sa préhension depuis l'extérieur de l'embout d'extrémité 8.

La butée 43 comporte aussi une face de retenue 46 qui est destinée à venir en contact avec le support flexible 6 pour son maintien en position et éviter un coulissement en translation du support flexible 6 le long de l'axe longitudinal X. La face de retenue est ménagée selon un plan parallèle au plan vertical Oyz.

Le corps médian 42 est étendu selon un axe d'extension A1 qui est ménagé à l'intérieur d'un plan parallèle au plan Oxz et qui forme un premier angle a entre l'axe longitudinal X et l'axe d'extension A1 qui est compris entre 30° et 60°, et qui est préférentiellement de l'ordre de 45°, à plus ou moins 5%.

L'organe de verrouillage 37 est conformé en un « S » aplati dont une extrémité comprend la butée 43 et une autre extrémité comprend le pied 41.

Le pied 41 s'étend selon une première longueur L1 prise parallèlement à l'axe longitudinal X entre le premier rebord 36 et un premier point d'inflexion 47 d'une face inférieure 45 de l'organe de verrouillage 37. La face inférieure 45 est la face de l'organe de verrouillage 37 qui est orientée vers l'extérieur de l'embout d'extrémité 8. La première longueur L1 est comprise entre 1% et 10% d'une longueur L de l'organe de verrouillage 37 prise entre le premier rebord 36 et la face de retenue 46.

Le corps médian 42 s'étend selon une deuxième longueur L2 prise parallèlement à l'axe longitudinal X entre le premier point d'inflexion 47 de la face inférieure 45 de l'organe de verrouillage 37 et un premier point d'attaque 48 de la face de maintien 44. Le premier point d'attaque 48 est le point de la face de maintien 44 qui est le plus proche du passage 12. La deuxième longueur L2 est comprise entre 75% et 85% de la longueur L de l'organe de verrouillage 37.

La tête 43 s'étend selon une troisième longueur L3 prise parallèlement à l'axe longitudinal X entre le premier point d'attaque 48 de la face de maintien 44 et la face de retenue 46. La troisième longueur L3 est comprise entre 1% et 15% de la longueur L de l'organe de verrouillage 37.

Sur la figure 7, l'organe de verrouillage 37 est d'une hauteur H prise parallèlement à l'axe vertical Oz entre une face intérieure 49 de la paroi interne 14 et la face inférieure 45 de la paroi supérieure 16 qui est de l'ordre d'une épaisseur E du support flexible 6. La face intérieure 49 de la paroi interne 14 est celle de la paroi interne 14 qui délimite le premier logement 41. L'épaisseur E du support flexible 6 est prise parallèlement à l'axe vertical Oz entre deux parois parallèles au plan vertical Oxy, dont une surface supérieure 50 et une surface inférieure 51, qui coulissent respectivement contre la face inférieure 45 de la paroi supérieure 16 et la face intérieure 49 de la paroi interne 14.

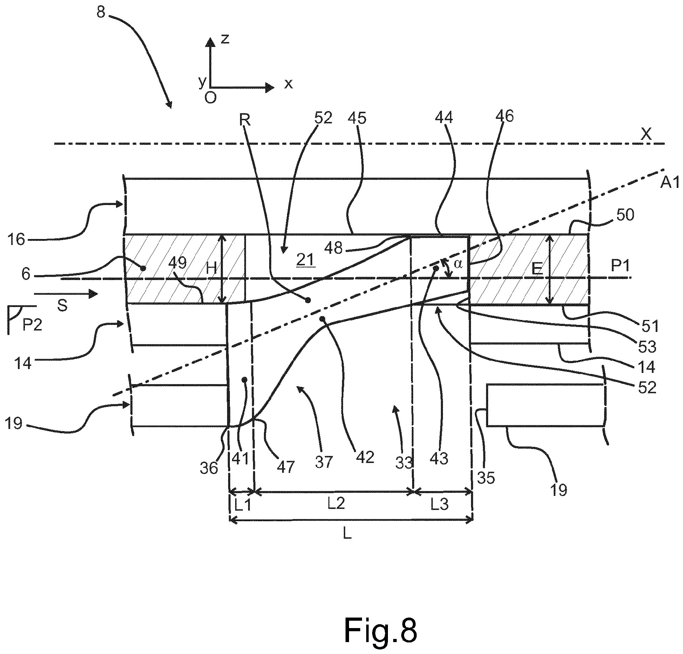

Ces dispositions sont telles que lors d'une introduction de la première extrémité 31 du support flexible 6 à l'intérieur du premier logement 21 selon un sens d'introduction S, illustrée sur la figure 8, la face de maintien 44 de l'organe de verrouillage 37 vient coulisser le long de la surface inférieure 51 du support flexible 6 jusqu'à ce que la face de maintien 44 vienne en aplomb d'une échancrure 52 que comprend le support flexible 6 et qui constitue un logement pour la tête 43. En position d'utilisation de l'embout d'extrémité 8, la face de retenue 46 vient en butée contre une première bordure 53 que comprend l'échancrure 52 ménagée à travers le support flexible 6. L'échancrure 52 est formée d'au moins un orifice par exemple ménagé de part en part du support flexible 6 pour recevoir la tête 43 de l'organe de verrouillage 37.

Le corps médian 42 et la tête 43 de l'organe de verrouillage 37 sont montés mobiles en rotation autour d'un axe de rotation R qui s'étend parallèlement à l'axe transversal Oy en étant logé à l'intérieur du premier logement 21. L'axe de rotation R est par exemple ménagé entre le pied 41 et le corps médian 42. Il en découle que l'axe de rotation R de l'organe de verrouillage 37 est logé à l'intérieur de l'espace interne 11 que délimite la paroi périphérique 20, ce qui minimise un basculement de l'organe de verrouillage 37 et conforte sa solidité, tout en empêchant son extraction hors du premier logement 21, ce qui garantit une impossibilité de désolidarisation de l'embout d'extrémité 8 et du support flexible 6.

Un tel embout d'extrémité 8 est aisément réalisable par moulage, notamment d'une matière plastique, un dégagement 54 étant ménagé entre la paroi inférieure 19 et la paroi interne 14 pour faciliter une opération de démoulage.

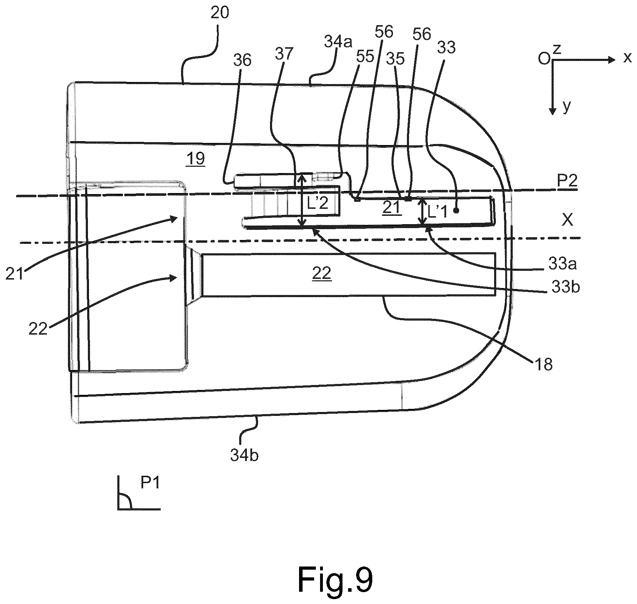

Selon une variante de réalisation illustrée sur la figure 9, le rebord 35 est équipé d'un godron 55 qui est ménagé en vis-à-vis de l'organe de verrouillage 37, et plus particulièrement en vis-à-vis de l'une de ses faces latérales pour empêcher une torsion ou une rotation de l'organe de verrouillage autour de l'axe longitudinal X, et ainsi conforter une pérennité de l'organe de verrouillage 37.

Selon une variante de réalisation, le rebord 35 est équipé d'au moins un doigt de guidage 56 du support flexible 6 lors de son introduction à l'intérieur du premier logement 21. De préférence, le ou les doigts de guidage sont étendus selon un axe orthogonal au premier plan P1.

Selon une autre variante, l'ouverture 33 comprend une première partie 33a qui comporte une première largeur L'1 qui est inférieure à une deuxième largeur d'ouverture L'2 que comprend une deuxième partie 33b de l'ouverture 33, la deuxième partie 33b étant ménagée en surplomb de l'organe de verrouillage 37, les largeurs d'ouverture étant pris parallèlement à l'axe transversal Oy entre deux portions de rebord 35 en vis-à-vis.

Bien entendu, diverses modifications peuvent être apportées par l'homme du métier à l'ensemble selon l'invention qui vient d'être décrit à titre d'exemple non limitatif, dès lors que l'on met en œuvre une forme de l'embout d'extrémité moulée simultanément avec le reste de l'embout d'extrémité 8.

## Revendications

1. Embout d'extrémité (8) pour un balai d'essuyage (1), l'embout d'extrémité (8) comprenant une paroi périphérique (20) séparant un environnement extérieur de l'embout d'extrémité (8) d'un volume interne (11) de l'embout d'extrémité (8), l'embout d'extrémité (8) délimitant un premier logement (21) disposé dans le volume interne (11) et qui s'étend majoritairement dans un premier plan (P1), un deuxième logement (22) étant interposé entre la paroi périphérique (20) et le premier logement (21), l'embout d'extrémité (8) comprenant au moins un organe de verrouillage (37) configuré pour lier l'embout d'extrémité (8) à un support flexible (6) du balai d'essuyage (1), l'organe de verrouillage (37) s'étendant au moins à partir de la paroi périphérique (20) et comprenant une butée (46) disposée au moins en partie dans le premier logement (21), l'organe de verrouillage (37) étant configuré pour que la butée (46) puisse être déplacée dans un deuxième plan (P2) transversal au premier plan (P1), en ce que le premier logement (21) et le deuxième logement (22) sont délimités par au moins une paroi interne (14), **caractérisé en ce que** l'organe de verrouillage (37) comprend un pied (41) qui s'étend de la paroi périphérique (20) à la paroi interne (14), l'organe de verrouillage (37) comprenant un corps médian (42) solidaire du pied (41) qui s'étend selon un axe d'extension (A1) qui forme avec le premier plan (P1) un premier angle (a) qui est compris entre 30° et 60°.

2. Embout d'extrémité (8) selon la revendication 1, **caractérisé en ce que** le premier logement (21) est configuré pour recevoir une première extrémité (31) d'un support flexible (6) du balai d'essuyage (1).

3. Embout d'extrémité (8) selon l'une quelconque des revendications précédentes, **caractérisé en ce que** le deuxième logement (22) est configuré pour recevoir un talon (5a) d'une lame racleuse (5) du balai d'essuyage (1).

4. Embout d'extrémité (8) selon l'une quelconque des revendications précédentes, **caractérisé en ce que** le premier angle (a) est de l'ordre de 45° à plus ou moins 10%.

5. Embout d'extrémité (8) selon l'une quelconque des revendications précédentes, **caractérisé en ce que** l'organe de verrouillage (37) est globalement conformé en « S » aplati vu dans le deuxième plan (P2).

6. Embout d'extrémité (8) selon l'une quelconque des revendications précédentes, **caractérisé en ce que** l'organe de verrouillage (37) comprend une tête (43) solidaire du corps médian (42) qui est logée à l'intérieur du premier logement (21).

7. Embout d'extrémité (8) selon la revendication 6, **caractérisé en ce que** la tête (43) comprend la butée (46), cette dernière étant destinée à venir en contact contre une première bordure (53) que comprend une échancrure (52) ménagée à travers le support flexible (6).

8. Embout d'extrémité (8) selon l'une quelconque des revendications 6 et 7, dans lequel la tête (43) est montée mobile en rotation autour d'un axe de rotation (R) qui s'étend dans le corps médian (42).

9. Balai d'essuyage (1) comprenant un embout d'extrémité (8) selon l'une quelconque des revendications précédentes, une lame racleuse (5) et un support flexible (6) comportant une première extrémité (31) logée à l'intérieur du premier logement (21).

## Patentansprüche

1. Endstück (8) für ein Wischerblatt (1), wobei das Endstück (8) eine Umfangswand (20) umfasst, die eine Außenumgebung des Endstücks (8) von einem Innenraum (11) des Endstücks (8) trennt, wobei das Endstück (8) eine erste Aufnahme (21) begrenzt, die im Innenraum (11) angeordnet ist und die sich überwiegend in einer ersten Ebene (P1) erstreckt, wobei eine zweite Aufnahme (22) zwischen der Umfangswand (20) und der ersten Aufnahme (21) gelegen ist, wobei das Endstück (8) mindestens ein Verriegelungsorgan (37) umfasst, das dazu ausgestaltet ist, das Endstück (8) mit einem flexiblen Träger (6) des Wischerblatts (1) zu verbinden, wobei sich das Verriegelungsorgan (37) mindestens von der Umfangswand (20) aus erstreckt und einen Anschlag (46) umfasst, der mindestens teilweise in der ersten Aufnahme (21) angeordnet ist, wobei das Verriegelungsorgan (37) dazu ausgestaltet ist, dass der Anschlag (46) in einer zweiten Ebene (P2) quer zur ersten Ebene (P1) verlagert werden kann, dass die erste Aufnahme (21) und die zweite Aufnahme (22) durch mindestens eine Innenwand (14) begrenzt sind, **dadurch gekennzeichnet, dass** das Verriegelungsorgan (37) einen Fuß (41) umfasst, der sich von der Umfangswand (20) zur Innenwand (14) erstreckt, wobei das Verriegelungsorgan (37) einen fest mit dem Fuß (41) verbundenen Mittelkörper (42) umfasst, der sich entlang einer Erstreckungsachse (A1) erstreckt, die mit der ersten Ebene (P1) einen ersten Winkel (α) bildet, der zwischen 30° und 60° beträgt.

2. Endstück (8) nach Anspruch 1, **dadurch gekennzeichnet, dass** die erste Aufnahme (21) dazu ausgestaltet ist, ein erstes Ende (31) eines flexiblen Trägers (6) des Wischerblatts (1) aufzunehmen.

3. Endstück (8) nach einem der vorhergehenden Ansprüche, **dadurch gekennzeichnet, dass** die zweite Aufnahme (22) dazu ausgestaltet ist, eine Wulst (5a) eines Wischergummis (5) des Wischerblatts (1) aufzunehmen.

4. Endstück (8) nach einem der vorhergehenden Ansprüche, **dadurch gekennzeichnet, dass** der erste Winkel (α) in der Größenordnung von 45° plus oder minus 10 % liegt.

5. Endstück (8) nach einem der vorhergehenden Ansprüche, **dadurch gekennzeichnet, dass** das Verriegelungsorgan (37) in der zweiten Ebene (P2) gesehen insgesamt wie ein abgeflachtes "S" geformt ist.

6. Endstück (8) nach einem der vorhergehenden Ansprüche, **dadurch gekennzeichnet, dass** das Verriegelungsorgan (37) einen fest mit dem Mittelkörper (42) verbundenen Kopf (43) umfasst, der im Innern der ersten Aufnahme (21) aufgenommen ist.

7. Endstück (8) nach Anspruch 6, **dadurch gekennzeichnet, dass** der Kopf (43) den Anschlag (46) umfasst, wobei Letzterer dazu bestimmt ist, gegen einen ersten Rand (53) in Kontakt zu gelangen, den ein Ausschnitt (52) umfasst, der durch den flexiblen Träger (6) hindurch ausgebildet ist.

8. Endstück (8) nach einem der Ansprüche 6 und 7, wobei der Kopf (43) drehbeweglich um eine Drehachse (R) gelagert ist, die sich in dem Mittelkörper (42) erstreckt.

9. Wischerblatt (1), das ein Endstück (8) nach einem der vorhergehenden Ansprüche, ein Wischergummi (5) und einen flexiblen Träger (6) umfasst, der ein erstes Ende (31) beinhaltet, das im Innern der ersten Aufnahme (21) aufgenommen ist.

## Claims

1. Terminal end piece (8) for a wiper blade (1), the terminal end piece (8) comprising a peripheral wall (20) which separates an external environment of the terminal end piece (8) from an internal space (11) of the terminal end piece (8), the terminal end piece (8) delimiting a first housing (21) which is arranged in the internal space (11) and which extends primarily in a first plane (P1), a second housing (22) being interposed between the peripheral wall (20) and the first housing (21), the end piece (8) comprising at least one locking member (37) which is configured to connect the terminal end piece (8) to a flexible support (6) of the wiper blade (1), the locking member (37) extending at least from the peripheral wall (20) and comprising a stop (46) which is at least partially arranged in the first housing (21), the locking member (37) being configured so that the stop (46) can be moved in a second plane transverse (P2) to the first plane (P1), the first housing (21) and the second housing (22) are delimited by at least one internal wall (14), caracterised in that the locking member (37) comprises a base (41) which extends from the peripheral wall (20) to the internal wall (14), the locking member comprising a central body (42) which is fixedly joined to the base (41) which extends along an extension axis (A1) which forms with the first plane a first angle (*α*) which is between 30° and 60°.

2. Terminal end piece (8) according to claim 1, wherein the first housing (21) is configured to receive a first end (31) of a flexible support (6) of the wiper blade (6).

3. Terminal end piece (8) according to one of the preceding claims, wherein the second housing (22) is configured to receive a heel (5a) of a scraper blade (5) of the wiper blade (1).

4. Terminal end piece (8) according to one of the preceding claims, wherein the first angle (*α*) is in the order of 45° plus or minus 10%.

5. Terminal end piece (8) according to one of the preceding claims, wherein the locking member (37) is generally in the form of a flattened "S" when viewed in the second plane (P2).

6. Terminal end piece (8) according to one of the preceding claims, wherein the locking member (37) comprises a head (43) which is fixedly joined to the central body (42) and which is received inside the first housing (21).

7. Terminal end piece (8) according to claim 6, wherein the head (43) comprises the stop (46), the stop being intended to come into contact with a first edge (53) which comprises a notch (52) which is provided through the flexible support (6).

8. Terminal end piece (8) according to one of the preceding claims 6 and 7, wherein the head (43) is mounted so as to be movable in rotation about a rotatio axis (R) which extends in the central body (42).

9. A wiper blade (1) comprising a terminal end piece according to one of the preceding claims, a scraper blade (5) and a flexible support (6) comprising a first end (31) accommodated inside the first housing (21).
